**Europäisches Patentamt**

**European Patent Office**

**Office européen des brevets**

(11) Veröffentlichungsnummer: **0 163 597**
**A1**

# (12) EUROPÄISCHE PATENTANMELDUNG

(21) Anmeldenummer: **85810151.2**

(22) Anmeldetag: **03.04.85**

(51) Int. Cl.⁴: **C 25 C 3/12**
**C 04 B 35/52**

(30) Priorität: **27.04.84 CH 2074/84**

(43) Veröffentlichungstag der Anmeldung:
**04.12.85 Patentblatt 85/49**

(84) Benannte Vertragsstaaten:
**AT BE CH DE FR GB IT LI LU NL SE**

(71) Anmelder: **SCHWEIZERISCHE ALUMINIUM AG**

**CH-3965 Chippis(CH)**

(72) Erfinder: **Newson, Esmond**
**Hintersteig 39**
**CH-8200 Schaffhausen(CH)**

(72) Erfinder: **Trojanovic, Davor**
**Aegertenstrasse 46**
**CH-8003 Zürich(CH)**

(54) **Verfahren zur Herabsetzung der bei erhöhter Temperatur bestehenden Oxidationsneigung von Kohlepulver bzw. unter Verwendung von Kohlepulver hergestellten Kohlekörpern.**

(57) Zur Herabsetzung der bei erhöhter Temperatur bestehenden Oxidationsneigung von Kohlepulver, bzw. von unter Verwendung von Kohlepulver hergestellten Kohlekörpern wie Elektroden, insbesondere Anoden vor allem für Aluminiumelektrolyseöfen, insbesondere von solchen mit einem Vanadiumgehaltals natürliche Verunreinigung, wird das Ausgangsmaterial auf Kohlenstoffbasis in zerkleinertem Zustand mit einem Oxidationsinhibitor dotiert. Hierzu wird das zerkleinerte Ausgangsmaterial mit einer Lösung mindestens einer chemischen Verbindung, insbesondere der Elemente Ba, Ga, Sn, Sb, Mn, Co, Fe, Ni, einzeln oder zu mehreren, vorteilhaft in kombination mit chemischen Verbindungen von Metalloiden, z.B. des Bors und oder des Phosphors, behandelt.

EP 0 163 597 A1

Verfahren zur Herabsetzung der bei erhöhter Temperatur bestehenden Oxidationsneigung von Kohlepulver bzw. von unter Verwendung von Kohlepulver hergestellten Kohlekörpern

---

Die vorliegende Erfindung bezieht sich auf ein Verfahren zur Herabsetzung der bei erhöhter Temperatur bestehenden Oxidationsneigung von Kohlepulver bzw. von unter Verwendung von Kohlepulver hergestellten Kohlekörpern, insbesondere von Kohleelektroden für Elektroöfen oder Elektrolyseöfen, vorzugsweise für die Erzeugung von Aluminium durch Schmelzflusselektrolyse, durch Dotierung des Ausgangsmaterials auf Kohlenstoffbasis in zerkleinertem Zustand mit einem Oxidationsinhibitor.

Zur Herstellung solcher Anoden werden Koks in zerkleinerter Form und Pech in einem geeigneten Verhältnis warm miteinander geknetet und innig durchmischt. Diese Mischung wird dann durch Verpressen, gegebenenfalls mit zusätzlichem Vibrieren, zu grünen Anodenkörpern geformt, welche später in einem Kalzinationsvorgang solchen Bedingungen unterworfen werden, dass das Pech verkokt und als fester Binder für die Kokspartikel wirkt, und gegebenenfalls eine mehr oder weniger weitgehende Graphitisierung stattfindet, wodurch die fertige Anode eine erhöhte elektrische Leitfähigkeit erhält.

In Elektrolyseöfen für die Erzeugung von Aluminium aus Tonerde durch Schmelzflusselektrolyse tauchen die Anoden mit ihrem unteren Teil in den auf etwa 940-970°C erwärmten Elektrolyten. Dadurch erwärmt sich der Anodenkopf im oberen Bereich auf eine Temperatur von etwa 200-400°C oder noch mehr, in der Nähe der Kruste mit daraufliegender Tonerdeschicht auf etwa 500-600°C.

Bei solchen Temperaturen setzt an der freien Anodenoberfläche unter Einwirkung der umgebenden Atmosphäre eine Oxidation ein, welche im besagten Temperaturbereich besonders stark ist und rings um die Anode zu einem Aushöhlen von deren Oberfläche führt.

Dieser Oxidation entgegenzuwirken, hat man schon lange durch Imprägnieren der Anodenoberfläche mit verschiedenen Chemikalien, wie Phosphaten, Boraten u.a.m, bzw. durch Auftragen einer Schutzschicht aus Aluminium oder keramischen Materialien, z.B. auf Basis von Aluminiumoxid, versucht. Solche Massnahmen sind jedoch nur beschränkt wirksam, weil die schützenden Schichten sich trotz allem relativ schnell abnützen oder abblättern und tiefere unbehandelte Schichten des Anodenmaterials bald der Umgebungsatmosphäre ausgesetzt werden.

In ähnlicher Art hat man auch die Oberfläche von Kohlenelektroden für Elektroöfen gegen Oxidation geschützt.

Es ist z.B. aus der GB-PS 865 320, aus den DE-OSen 30 30 479 und 30 30 493 sowie aus Beiträgen in "Light Metals", Jahrgänge 1975, Vol. 1, S. 325-338, 1981, S. 459-470 und 1982, S. 713-724 bekannt, vor dem Brennen oder Verkoken der grünen Kohlekörper bzw. Anoden, dem Gemisch aus Koks und Pech Oxidationsinhibitoren zuzusetzen, nämlich Bor- und/oder Phosphorverbindungen, auch in Verbindung mit Zinksalzen, und ferner Aluminiumfluorid. In dieser Art zugegeben, ist dann der Oxidationsinhibitor über die ganze Masse des Kohlekörpers verteilt, wodurch ein besserer, dauerhafter Schutz gegen Oxidation erreicht wurde.

Vor Jahrzehnten wurden für die Herstellung von Anoden aus Steinkohle gewonnener Koks und Pech guter Qualität verwendet. Im Laufe der letzten Jahrzehnte wurde jedoch bekanntlich Steinkohle immer mehr durch Erdöl verdrängt und ersetzt, so dass die Industrie sich genötigt sah, auf Petroleumkoks und -pech überzugehen. In den ersten Jahren war solches Material in ebenso guter Qualität erhältlich wie die aus Steinkohle gewonnenen Koks und Pech. Die Lage hat sich aber relativ schnell verschlechtert, so dass in jüngerer Zeit der Bedarf auch mit Material bedeutend schlechterer Qualität, d.h. mit einem höheren Verunreinigungsgrad - entsprechend den Rohölvorkommen -, gedeckt werden musste.

Heutzutage sind Grünkokse erhältlich, deren Gehalte an am häufigsten vorhandenen metallischen Verunreinigungen etwa folgende sind:

|  |  |
|---|---|
| Vanadium | 0,001 - 0,6 Gew.-%, |
| Eisen | 0,002 - 0,3 Gew.-%, |
| Nickel | 0,005 - 0,05 Gew.-%. |

Diese Elemente liegen im Material üblicherweise als Verbindungen, z.B. als Karbide, vor.

Bei aus Steinkohle gewonnenem Koks liegen die Gehalte an diesen Elementen eher im unteren Teil der obgenannten Bereiche, wobei die Eisen- und Nickelgehalte meistens grösser sind als die Vanadium-Gehalte.

Umgekehrt liegen bei aus Rohöl gewonnenem Koks die Gehalte an diesen Elementen eher im mittleren und oberen Teil der obgenannten Bereiche, wobei die Vanadium-Gehalte meistens grösser als die Gehalte an Eisen und Nickel sind.

Selbstverständlich sind diese Verunreinigungen ebenfalls im aus Grünkoks gewonnenen kalzinierten Koks, mit etwas konzentrierteren Gehalten, zu finden.

Von diesen metallischen Verunreinigungen ist in bezug auf die vorerwähnte Oxidationsneigung von Kohlekörpern, wie Elektroden, insbesondere Anoden, vor allem das Vanadium störend, weil dieses Element, bzw. dessen Verbindungen, am stärksten die Eigenschaft aufweisen, als Oxidationskatalysator zu wirken und deshalb den vorbeschriebenen, in Kontakt mit der Umgebungsatmosphäre stattfindenden Abbrennvorgang der in Betrieb stehenden Kohlekörper zu beschleunigen. Eine solche, oxidationsfördernde Wirkung zeigen auch Verbindungen der weiteren Elemente Nickel und Eisen, jedoch in geringerem Ausmass.

Der Erfindung liegt die Aufgabe zugrunde, ein Verfahren zur Herstellung von Kohlepulver und Kohlekörpern, insbesondere von Elektroden für Elektroöfen oder Elektrolyseöfen, besonders von Anoden für Aluminiumelektrolyseöfen, mit verminderter Abbrenneigung, zu entwickeln, das die erwähnten unerwünschten, nachteiligen Erscheinungen in möglichst reduziertem Masse aufweist. Als Kohlepulver sollen dabei auch Grünkokse mit metallischen Verunreinigungen - etwa der vorgenannten Art - in Frage kommen, insbesondere solche mit hohen Vanadiumgehalten.

Diese Aufgabe wird erfindungsgemäss dadurch gelöst, dass als Oxidationsinhibitor mindestens eines der Elemente Ca, Sr, Ba, Ga, Sn, Sb, Mn, Co, Fe, Ni verwendet wird. Bevorzugt wird als Oxidationsinhibitor mindestens eines der Elemente Ba, Ga, Sn, Sb, Mn, Co, Fe, Ni verwendet.

Solche Inhibitoren besitzen die Eigenschaft, die oxidationsfördernde Wirkung von als Verunreinigungen vorliegenden Elementen, insbesondere des Vanadiums bzw. dessen Verbindungen, weitgehend zu neutralisieren und sogar die bei erhöhter Temperatur vorhandene Oxidationsneigung von Kohlenstoff in Kontakt mit der umgebenden Atmosphäre zu reduzieren. Der zur schützenden Wirkung führende Mechanismus lässt sich noch nicht erklären. Möglicherweise werden oxidationsfördernde Verbindungen der im Material vorhandenen Verunreinigungen, bzw. kristalline Formen davon, bei Anwendung des erfindungsgemässen Verfahrens durch andere, z.B. intermetallische Verbindungen, ersetzt, die ein bedeutend neutraleres oder sogar antioxidatives Verhalten aufweisen.

Damit sich solche Reaktionen mit den als Verunreinigungen vorliegenden Elementen möglichst gut abwickeln können, werden vorzugsweise in erhöhter Temperatur zersetzbare chemische Verbindungen der Inhibitorelemente verwendet.

Die erfindungsgemässen Inhibitoren, bzw. deren chemischen Verbindungen, werden zur besseren Verteilung vorteilhafterweise in gelöster Form auf das zerkleinerte Ausgangsmaterial aufgetragen. Als Lösungsmittel kommen Wasser oder organische Lösungsmittel, wie z.B. Alkohole (Aethanol), in Betracht. Das Durchmischen der Lösung mit dem Materialpulver kann chargenweise erfolgen, wobei es für ein besseres Durchdringen gegebenenfalls zweckmässig sein kann, die Lösung während einiger Zeit auf das Material einwirken zu lassen. Es ist aber auch möglich, das Imprägnieren des Materialpulvers in einem kontinuierlichen Arbeitsgang durchzuführen, wobei das z.B. auf ein Förderband geladene Pulver durch eine mit Inhibitorlösung gespeiste Sprühanlage geführt wird, wobei z.B. durch feststehende Mischeinrichtung dafür gesorgt wird, dass das Pulver durchmischt wird und somit möglichst alle Teilchen mit der besprühten Lösung benetzt werden. Andere Auftragsverfahren sind möglich, wie z.B. das Herunterrieselnlassen des Pulvers durch eine Sprühkammer.

Mit Vorteil wird nach diesen verschiedenen Benetzungsverfahren das Lösungsmittel verdampft und das behandelte Material getrocknet, wodurch das Material für die Herstellung der Kohlekörper bereitsteht, welche nach konventionellen Methoden erfolgen kann.

Es ist ferner bei der Herstellung von Kohlekörpern durch Mischen von zerkleinertem Koks mit Pech in der Wärme möglich, den Oxidationsinhibitor in geeigneter Form während dieser Mischoperation zuzusetzen oder im voraus im erwärmten Pech zu durchmischen.

Es hat sich gezeigt, dass die verschiedenen vorerwähnten Elemente mit Oxidationsinhibitorwirkung bei einem gleichen Gehalt unterschiedliche Wirkungsgrade besitzen und dass in Kombinationen mit Metalloiden, insbesondere mit Bor vor allem in der Kombination von Mn und B oder Co und B, erhöhte Wirkungsgrade erreicht werden.

Zur Erreichung der vollen Wirkung des Oxidationsinhibitors kann es zweckmässig sein, das behandelte Material einer Kalzination zu unterwerfen. Der Kalzinationsvorgang kann auf das zerkleinerte behandelte Material einwirken oder aber nach dem Vermischen mit Pech bei der Kalzination der geformten Kohlekörper erfolgen.

Als lösliche Verbindungen der obgenannten Elemente mit Oxidationsinhibitorwirkung sind Salze von anorganischen oder organischen Säuren bzw. organometallische Verbindungen verwendbar. Die Metalloide Bor und Phosphor werden bevorzugt als Borsäure bzw. Phosphorsäure oder als Borate bzw. Phosphate eingesetzt.

Die günstige Wirkung von Oxidationsinhibitorelementen wurde zunächst anhand von Vorversuchen festgestellt.

Für diese Vorversuche wurde einerseits ein Petroleumgrünkoks amerikanischer Herkunft (Lieferant: Firma Cities Services), mit folgendem durchschnittlichen Verunreinigungsgehalt: V = 0,06 Gew.-%, Fe = 0,02 Gew.-%, Ni = 0,02 Gew.-%, ferner ein kalzinierter Petroleumkoks aus Venezuela (Lieferant: Firma Lagoven) mit Verunreinigungsgehalt: V = 0,23 Gew.-%, Fe = 0,004 Gew.-%, Ni = 0,036 Gew.-% verwendet. Von diesen Materialien in zerkleinertem Zustand wurde für die Versuche jeweils die Fraktion mit 0,5 - 1,0 mm Partikelgrösse verwendet und davon je eine 10 g schwere Probe eingesetzt.

Die Oxidationsteste wurden an unbehandelten und an mit verschiedenen Elementen dotierten Proben, jeweils nach einer Kalzination bei 1000°C während 4 Stunden unter Stickstoffatmosphäre, vorgenommen. Beim verwendeten Grünkoks verursacht diese Kalzination einen Gewichtsverlust von etwa 5 bis 10 Gew.-%, beim verwendeten kalzinierten Koks einen solchen von etwa 1 bis 2 Gew.-%.

Für den Oxidationstest diente ein in einen Ofen einsetzbares und mit einem Thermoelement versehenes Reaktionsglasrohr mit 25 mm Innendurchmesser. Für das Einleiten der Oxidationsluft ist ferner dieses Rohr mit einer umgebenden Rohrschlange versehen, deren eines Ende in das hintere Ende des Reaktionsrohrs einmündet und deren anderes Ende etwa neben dem auch als Austritt für die Luftströmung dienenden Einfüllende des Reaktionsrohrs liegt. Mit dieser Anordnung wird sichergestellt, dass die einströmende Luft die Solltemperatur erreicht hat, wenn sie in das Reaktionsrohr eintritt. Das Reaktionsrohr ist mit Glasperlen (kurze Glasrohrabschnitte) gefüllt. Auf einer bestimmten Länge des Reaktionsrohrs wird die Koksprobe auf die Glasperlen verteilt, so dass beim Oxidationstest praktisch alle Kokspartikel der Probe gleichmässig durch den Warmluftstrom bespühlt werden.

Als Ausführungsbeispiel für eine Dotierung soll nun die Behandlung einer Koksprobe mit einer Mischung Mangan-Bor im Einzelnen beschrieben werden.

Eine 10 g schwere Probe des oben erwähnten Cities-Service-Grünkokspulvers wurde mit 20 $cm^3$ einer wässrigen, 0,61 g Borsäure ($H_3BO_3$) und 0,48 g Mangannitrat ($Mn(NO_3)_2.4H_2O$) enthaltenden Inhibitorlösung durchtränkt, anschliessend durch Verdampfung des Wassers getrocknet und dann wie oben beschrieben kalziniert. Diese zugesetzten Mengen an Mangannitrat und Borsäure entsprechen etwa 0,09 g Mn und 0,10 g B, so dass nach der Kalzination der Koks mit je etwa 1 Gew.-% Mn und B dotiert ist.

Die so vorbereitete Probe wurde im Reaktionsglasrohr verteilt und das Ganze auf eine Temperatur von 420°C aufgewärmt, worauf während 53 Stunden durch das Rohr ein konstanter Luftstrom von 3,5 Nl/min erzeugt wurde. Nach dem Abstellen des Luftstroms und Erkalten konnte ein Gewichtsverlust von 1,00 g gemessen werden, was einer Oxidationsgeschwindigkeit von 0,019 g pro Stunde entspricht.

Beim Vergleichsversuch mit dem gleichen Ausgangsmaterial ohne Dotierung und mit gleichartiger Vorkalziantion konnte nach dem Oxidationstest mit konstantem Luftstrom von 3,8 Nl/min während 25 Stunden ein Gewichtsverlust von 2,03 g festgestellt werden, was einer Oxidationgeschwindigkeit von 0,081 g pro Stunde, d.h. von etwa 0,8% pro Stunde entspricht.

Durch Vergleich dieser Oxidationsgeschwindigkeiten lässt sich schliessen, dass durch das Dotieren mit 1 Gew.-% Mn + 1 Gew.-% B (bezogen auf kalzinierten Koks) die Oxidation auf etwa 23% derjenigen des unbehandelten Materials, d.h. um etwa 77%, vermindert werden kann.

Weitere Versuche wurden mit anderen Dotierungen zwischen 420°C und 650°C durchgeführt. Deren beste Ergebnisse sind in der nachstehenden Tabelle zusammengefasst. Mit relativer Oxireaktivität wird der Wert bezeichnet, auf welchen diese Reaktivität gegenüber der Nullprobe vermindert wird. Alle Dotierungen sind in Gew.-% angegeben.

0163597

| Probe | Temperatur beim Oxidationstest | relative Oxireaktivität |
|---|---|---|

Ausgangsmaterial: Grünkoks Cities Services: (V = 0,06 %)

| | | |
|---|---|---|
| 1) ohne Dotierung | 420° C | 100 % |
| 2) + 1 % Ba | 420° | 90 % |
| 3) + 1 % Mn | 420° | 63 % |
| 4) + 1 % B | 420° | 55 % |
| 5) + 1 % Co | 420° | 53 % |
| 6) + 1 % Ga | 420° | 27 % |
| 7) + 1 % Mn + 1 % B | 420° | 23 % |
| | | |
| 8) ohne Dotierung | 440° C | 100 % |
| 9) + 1 % Mn | 440° | 73 % |
| 10) + 1 % Co | 440° | 60 % |
| 11) + 1 % B | 440° | 53 % |
| 12) + 1 % Ga | 440° | 23 % |
| 13) + 0.5 % Co + 0.5 % B | 440° | 22 % |
| 14) + 1 % Co + 1 % Mn | 440° | 45 % |
| 15) + 0.5 % Mn + 0.5 % B | 440° | 20 % |
| 16) + 1 % Mn + 1 % B | 440° | 20 % |
| | | |
| 17) ohne Dotierung | 650° C | 100 % |
| 18) + 0.5 % Mn + 0.5 % B | 650° | 10 % |
| 19) + 0.1 % Mn + 0.1 % B | 650° | 30 % |

Ausgangsmaterial: kalzinierter Lagoven Koks (V = 0,23 %)

| | | |
|---|---|---|
| 20) ohne Dotierung | 440° C | 100 % |
| 21) + 0.01 % Sb | 440° | 36 % |
| 22) + 0.05 % Sb | 440° | 24 % |
| 23) + 0.5 % Mn + 0.5 % B | 440° | 31 % |
| 24) + 1 % Mn + 1 % B | 440° | 22 % |
| 25) ohne Dotierung | 650° C | 100 % |
| 26) + 0.5 % Mn + 0.5 % B | 650° | 5 % |

Diese verschiedenen Beispiele zeigen, dass mit der Kombination aus einem inhibierenden metallischen Element, wie Mn, und einem Metalloid, wie Bor, die besten Ergebnisse erzielt werden.

Ferner zeigen die Beispiele 13 und 14, dass 1 Gew.-% Mn + 1 Gew.-% B keine Verbesserung gegenüber 0,5 Gew.-% Mn + 0,5 Gew.-% B mehr bringt, was darauf hindeutet, dass bereits mit geringeren kombinierten Mn+B-Gehalten eine wesentliche Verminderung der Oxireaktivität erreichbar ist.

Bei den Vorversuchen wurde immer, um markante Resultate bezüglich der relativen Oxireaktivität zu erzielen, mit Dotierungen von ≥ 1 Gew.-% gearbeitet.

In praxisnahen Versuchen hat sich jedoch gezeigt, dass schon Konzentrationen der erfindungsgemässen Oxidationsinhibitoren ab 0.01 Gew.-% die relative Oxireaktivität merklich herabsetzt, wobei allerdings erst ab einer Konzentration von 0.1 Gew.-% der verfahrenstechnische Aufwand wirtschaftlich erfolgreich ist. Desweiteren zeigte sich, dass eine Kalzinationstemperatur von mindestens 1000°C von Vorteil ist.

Ferner wurde festgestellt, dass mit der erfindungsgemässen Dotierungsart, auch bei aus Steinkohle gewonnenem Koks, eine Verminderung der Oxireaktivität erzielbar ist.

Patentansprüche

1. Verfahren zur Herabsetzung der bei erhöhter Temperatur bestehenden Oxidationsneigung von Kohlepulver bzw. von unter Verwendung von Kohlepulver hergestellten Kohlekörpern, insbesondere von Kohleelektroden für Elektroöfen oder Elektrolyseöfen, vorzugsweise für die Erzeugung von Aluminium durch Schmelzflusselektrolyse, durch Dotierung des Ausgangsmaterials auf Kohlenstoffbasis in zerkleinertem Zustand mit einem Oxidationsinhibitor,

dadurch gekennzeichnet,

dass als Oxidationsinhibitor mindestens eines der Elemente Ca, Sr, Ba, Ga, Sn, Sb, Mn, Co, Fe, Ni verwendet wird.

2. Verfahren nach Anspruch 1, dadurch gekennzeichnet, dass als Oxidationsinhibitor mindestens eines der Elemente Ba, Ga, Sn, Sb, Mn, Co, Fe, Ni verwendet wird.

3. Verfahren nach Anspruch 1, dadurch gekennzeichnet, dass das als Oxidationsinhibitor zusätzlich zu mindestens einem der Elemente mindestens ein Metalloid, insbesondere Bor, verwendet wird.

4. Verfahren nach Anspruch 3, dadurch gekennzeichnet, dass als Oxidationsinhibitor Mangan und Bor oder Kobalt und Bor verwendet werden.

5. Verfahren nach einem der Ansprüche 1 bis 4, dadurch gekennzeichnet, dass die Dotierung durch Behandlung des Ausgangsmaterials auf Kohlenstoffbasis mit einer chemischen Verbindung mit mindestens einem der als Oxidationsinhibitor wirkenden Elemente vorgenommen wird.

6. Verfahren nach Anspruch 5, dadurch gekennzeichnet, dass die chemische Verbindung als wässrige bzw. organische, insbesondere alkoholische, Lösung eingesetzt wird.

7. Verfahren nach Anspruch 6, dadurch gekennzeichnet, dass als Verbindungen der mitwirkenden Metalloide Borsäure, Phosphorsäure oder deren Salze, eingesetzt werden.

8. Verfahren nach einem der Ansprüchen 1 bis 4, dadurch gekennzeichnet, dass die Konzentration des Oxidationsinhibitors, bezogen auf das Gewicht des kohlenstoffhaltigen Materials mindestens 0.01, vorzugsweise mindestens 0.1 Gew.-%, beträgt.

9. Verfahren nach mindestens einem der Ansprüche 1 bis 8, dadurch gekennzeichnet, dass das dotierte und getrocknete Kohlenstoffmaterial vor dem betrieblichen Einsatz kalziniert wird.

10. Verfahren nach Anspruch 9, dadurch gekennzeichnet, dass die Kalzinationstemperatur mindestens 1000°C beträgt.

11. Kohlekörper, insbesondere Kohleelektrode für Elektrolyseöfen, vorzugsweise für die Erzeugung von Aluminium durch Schmelzflusselektrolyse, mit bei erhöhter Temperatur verminderter Oxidationsneigung,

dadurch gekennzeichnet,

dass dieser als Oxidationsinhibitor mindestens eines der Elemente Ca, Sr, Ba, Ga, Sn, Sb, Mn, Co, Fe, Ni enthält.

12. Kohlekörper nach Anspruch 11, dadurch gekennzeichnet, dass dieser als Oxidationsinhibitor zusätzlich mindestens ein Metalloid, insbesondere Bor, vorzugsweise Mangan und B, enthält und die Gesamtkonzentration des Oxidationsinhibitors mindestens 0.01, vorzugsweise mindestens 0.1 Gew.-%, bezogen auf das Gewicht des kohlenstoffhaltigen Materials, beträgt.

**0163597**

Nummer der Anmeldung

## EUROPÄISCHER RECHERCHENBERICHT

Europäisches Patentamt

EP 85 81 0151

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-B-1 209 478 (LONZA-WERKE) <br><br> * Insgesamt * <br><br> --- | 1-3,5, 11 | C 25 C .3/12 <br> C 04 B 35/52 |
| X | DE-C- 825 670 (CHEMISCHE FABRIK GRIESHEIM) <br><br> --- | 1,2,5, 6,11 | |
| A | DE-B-1 256 138 (SIGRI ELEKTROGRAPHIT) <br><br> --- | | |
| A | DE-A-1 471 506 (UNITED COKE AND CHEMICALS) <br><br> --- | | |
| A | CHEMICAL ABSTRACTS, Band 85, Nr. 18, 1. November 1976, Seite 381, Nr. 129414x, Columbus, Ohio, US; V. YA. TSAREV u.a.: "Green mass of carbon-graphite materials" & OTKRYTIYA, IZOBRET., PROM. OBRAZTSY, TOVARNYE ZNAKI 1976, 53(1), 197, & SU - A - 243 587 (05.01.1976) <br><br> ----- | | **RECHERCHIERTE SACHGEBIETE (Int. Cl.4)** <br><br> C 04 B <br> C 25 C |

Der vorliegende Recherchenbericht wurde für alle Patentansprüche erstellt.

| Recherchenort <br> DEN HAAG | Abschlußdatum der Recherche <br> 06-05-1985 | Prüfer <br> STEIN K.K. |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82